(19) Europäisches Patentamt
European Patent Office
Office européen des brevets

(11) **EP 2 418 509 B1**

(12) **EUROPEAN PATENT SPECIFICATION**

(45) Date of publication and mention
of the grant of the patent:
**17.07.2013 Bulletin 2013/29**

(51) Int Cl.:
*G01S 13/87* (2006.01)     *G01S 13/72* (2006.01)
*G01S 13/42* (2006.01)     *G01S 5/04* (2006.01)
*G01S 13/86* (2006.01)

(21) Application number: **11177034.3**

(22) Date of filing: **09.08.2011**

(54) **Three-dimensional target tracking**

Dreidimensionale Zielverfolgung

Suivi de cible tridimensionnelle

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.08.2010 IT TO20100685**

(43) Date of publication of application:
**15.02.2012 Bulletin 2012/07**

(73) Proprietor: **SELEX ES S.p.A.**
**Roma (IT)**

(72) Inventors:
• **Mazzei, Silvia**
  **00131 Roma (IT)**
• **Vargonaite, Ausra**
  **00131 Roma (IT)**

(74) Representative: **Bergadano, Mirko et al**
**Studio Torta S.p.A.**
**Via Viotti, 9**
**10121 Torino (IT)**

(56) References cited:
**DE-A1- 3 430 453     DE-A1- 4 123 898**
**US-A- 4 621 267     US-A- 6 002 358**

• **LI BINBIN ET AL: "A novel three-dimensional data association algorithm for 2D radars and sensors", SIGNAL PROCESSING SYSTEMS (ICSPS), 2010 2ND INTERNATIONAL CONFERENCE ON, IEEE, PISCATAWAY, NJ, USA, 5 July 2010 (2010-07-05), pages V1-668, XP031737856, ISBN: 978-1-4244-6892-8**
• **LEUNG H ET AL: "LEAST SQUARES FUSION OF MULTIPLE RADAR DATA", RC. COLLOQUE INTERNATIONAL SUR LE RADAR - INTERNATIONALCONFERENCE ON RADAR, SOCIETE DES ELECTRICIENS, PARIS, FR, 6 May 1994 (1994-05-06), pages 364-369, XP009073136,**

**Description**

## TECHNICAL FIELD OF THE INVENTION

The present invention relates to three-dimensional target tracking. In particular, the present invention allows a three-dimensional track of a target to be generated on the basis of two-dimensional and/or three-dimensional tracks generated by target location systems.

## STATE OF THE ART

As known, target location system means a system/apparatus/device designed to locate one or more targets.

In particular, hereinafter, the expression "target location system" is intended to mean a system configured to generate and provide tracking data which indicate position and speed of a target, and which will be called "target tracks" hereinafter for description simplicity. Target tracks may comprise two-dimensional (2D) or three-dimensional (3D) positions and speeds.

In detail, a two-dimensional (2D) position and a two-dimensional (2D) speed of a two-dimensional target track (2D) may be expressed in:

- polar (or slant) coordinates, i.e. in terms of range $\rho$ and azimuth $\theta$, and range speed component $V_\rho$ and azimuth speed component $V_\theta$, respectively;
- bearing coordinates, i.e. in terms of azimuth $\theta$ and elevation $\varphi$, and azimuth speed component $V_\theta$ and elevation speed component $V_\varphi$, respectively;

- geographic coordinates, i.e. in terms of latitude lat and longitude *long,* and speed components with respect to latitude $V_{lat}$ and longitude $V_{long}$, respectively; and
- Cartesian coordinates, i.e. in terms of coordinates $(x, y)$ and speed components $(V_x, V_y)$ with respect to a Cartesian plane tangent to the surface of the Earth, respectively.

Furthermore, a three-dimensional position (3D) and a three-dimensional speed (3D) of a three-dimensional target track (3D) may be expressed in:

- spherical coordinates, i.e. in terms of range $\rho$, azimuth $\theta$ and elevation $\varphi$, and range speed component $V_\rho$, azimuth speed component $V_\theta$ and elevation speed component $V_\varphi$, respectively;
- geographic coordinates, i.e. in terms of latitude *lat,* longitude *long* and altitude *alt,* and speed components with respect to latitude $V_{lat}$, longitude $V_{long}$ and altitude $V_{alt}$, respectively; and
- Cartesian coordinates, i.e. in terms of coordinates $(x, y)$ and speed components $(V_x, V_y, V_z)$ with respect to a given Cartesian three-dimensional reference system, respectively.

Examples of target location systems are:

- radar systems, such as

  - the so-called Primary Surveillance Radars (PSRs), which generally provide two-dimensional (2D) target tracks expressed in polar (or slant) coordinates, and
  - the so-called Secondary Surveillance Radars (SSRs), which generally provide three-dimensional (3D) target tracks expressed in spherical coordinates;

- radio direction finding systems, which generally provide two-dimensional (2D) target tracks expressed in bearing coordinates; and
- satellite location terminals which, on the basis of signals received from a Global Navigation Satellite System (GNSS), such as for example GPS system, Galileo system or GLONASS system, and when enabled, also from a Satellite Based Augmentation System (SBAS), such as for example WAAS system, EGNOS system or MASAS system, determine two-dimensional (2D) or three-dimensional (3D) tracks of the targets on board which they are installed, said tracks being generally expressed in geographic or Cartesian coordinates.

Hereinafter, for description simplicity, the two-dimensional position/speed/tracks will be called 2D positions/speed/tracks, while the three-dimensional position/speed/tracks will be called 3D position/speed/ tracks.

Similarly, hereinafter, again for description simplicity, target location systems which provide (i.e. generate) 2D tracks will be called 2D location systems, while target location systems which provide (i.e. generate) 3D tracks will be called 3D location systems.

2D and/or 3D location systems are currently used within the scope of maritime, air and land surveillance, e.g. for coast surveillance or in airports.

For example, a known air surveillance system which uses two 2D radars is described in German patent application DE 41 23 898 A1.

In particular, DE 41 23 898 A1 describes a 3D radar system which comprises two 2D radars separated by a known distance on a horizontal plane which transmit fan-shaped beams by turning in synchronized manner in opposite directions. Said 3D radar system calculates the height of a flying object by means of triangulation using the range measurements relative to the flying object provided by two 2D radars and the distances between said 2D radars and the intersection point of the beams. When the target is out of the vertical plane of symmetry of the 3D radar system, DE 41 23 898 A1 suggests to determine a relation between the angular positions of the beams as a function of the direction of flight and of the speed of the flying object.

As described in DE 41 23 898 A1, in order to determine a 3D track of a flying object, it is absolutely necessary to use two 2D radars configured to transmit fan-shaped beams by turning in synchronized manner in opposite directions.

Furthermore, a known deghosting method for air surveillance is disclosed in US 4 621 267 A.

In particular, US 4 621 267 A describes a passive system and related methods for detecting the location of a plurality of N targets by using two X-beam antenna systems, by measuring the time delay between receipt of signals in the two planes of each X-beam which are received directly from the target, and by measuring the time delay between the receipt of signals in the two planes of each X-beam which signals are emitted by the target but reflected from a remote surface. By known these two time delays for each antenna system, the heights of the antenna systems, the fixed angle between the two planes of the X-beam for each system, and the rate of rotation of the X-beam for each system, according to US 4 621 267, a direct calculation is established to determine the altitude of each target as viewed from each of the two antenna systems. Bearing or azimuth angles are determined for each target at each antenna system, and the actual N target locations of the $N^2$ possible locations are determined by locating the intersection of lines defined by azimuth angles for which the associated target altitudes for both the antenna systems are equal.

## OBJECT AND SUMMARY OF THE INVENTION

Currently, target location systems which may operate in mutually even very different manners are used in the scope of maritime, air and land surveillance, and for this reason the Applicant felt the need to develop a three-dimensional target tracking method which did not require the need to impose specific operating constraints to the target location systems used, unlike, for example, the 3D radar system described in DE 41 23 898 A1, in which the two 2D radars must necessarily transmit fan-shaped beams turning in synchronized manner in opposite directions.

Furthermore, target location systems which may provide 2D and/or 3D target tracks expressed in different formats, e.g. slant, bearing, geographic, spherical or Cartesian coordinates, are currently used in the scope of maritime, air and land surveillance, and for this reason the Applicant felt the need to develop said three-dimensional target tracking method so that said method allows a 3D target track to be generated on the basis of 2D and/or 3D tracks expressed in any format.

Therefore, it is an object of the present invention to provide a method for generating a 3D target track on the basis of 2D and/or 3D tracks expressed in any format and generated by track location systems operating in any manner.

The aforesaid object is reached by the present invention in that it relates to a three-dimensional target tracking method and to a system, a processor and a software program product configured to implement said three-dimensional target tracking method as defined in the appended claims.

## BRIEF DESCRIPTION OF THE DRAWINGS

For a better understanding of the present invention, some preferred embodiments thereof will now be illustrated only by way of non-limitative example, and with reference to the accompanying drawings (not in scale), in which:

- Figure 1 schematically illustrates a three-dimensional target tracking system according to the present invention;
- Figure 2 schematically shows measuring errors of a primary surveillance radar;
- Figure 3 schematically shows two primary surveillance radars and respective coverage areas;
- Figure 4 schematically shows an absolute reference system used in a first operative scenario for carrying out a correlation test of two two-dimensional tracks according to a preferred embodiment of the present invention;
- Figure 5 schematically shows a Cartesian reference plane used in a second operative scenario for carrying out a correlation test of two two-dimensional tracks according to a further embodiment of the present invention; and
- Figure 6 schematically shows a target location system positioned on the surface of the Earth which locates and tracks a target positioned at a given distance from the surface of the Earth.

## DETAILED DESCRIPTION OF PREFERRED EMBODIMENTS OF THE INVENTION

The present invention will now be described in detail with reference to the accompanying drawings to allow a person skilled in the art to provide and use the same. Various changes to the described embodiments will be immediately apparent to people skilled in the art, and the described general principles may be applied to other embodiments and applications without therefore departing from the scope of protection of the present invention, as defined in the appended claims.

Therefore, the present invention must not be considered limited to the described and illustrated embodiments but instead confers the broadest scope of protection, in accordance with the principles and features described and claimed herein.

Furthermore, the present invention is actuated by means of a software program product comprising code portions adapted to implement, when the software program product is loaded in the memory of an electronic processor and executed by said electronic processor, the target tracking method described below.

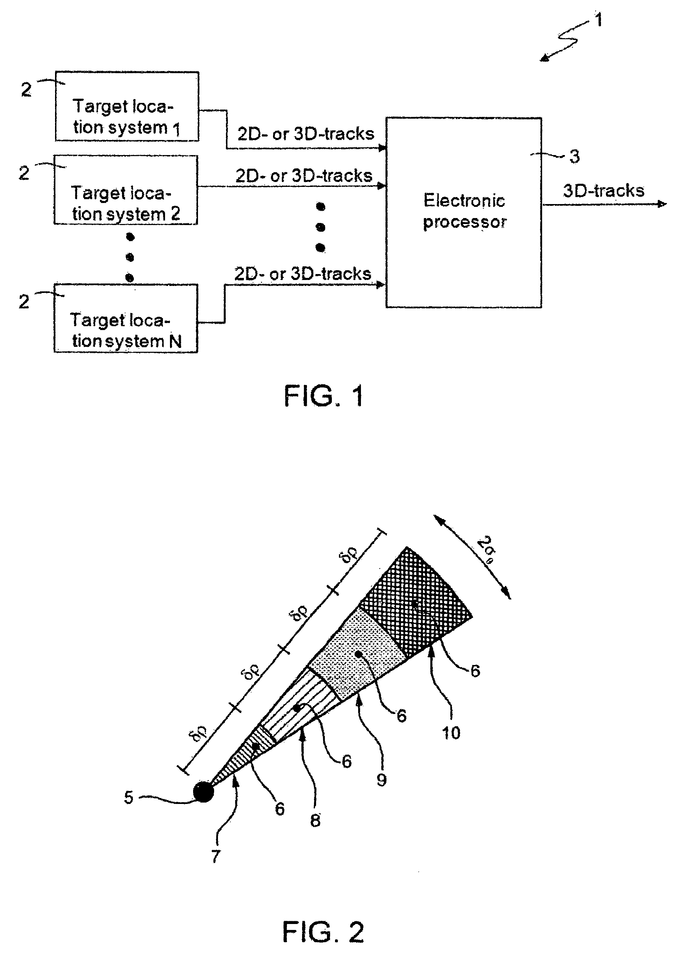

Figure 1 shows a block chart representing a three-dimensional target tracking system 1 according to the present invention.

In particular, as shown in figure 1, the three-dimensional target tracking system 1 comprises N target location systems 2, where $N$ is an integer number higher than, or equal to, two, i.e. $N \geq 2$.

In particular, each track location system 2 is configured to generate respective 2D or 3D target tracks.

Furthermore, again as shown in figure 1, the three-dimensional target tracking system 1 also comprises an electronic processor 3, e.g. a computer, which is coupled to N target location systems 2 to acquire therefrom the respective generated 2D or 3D tracks and is programmed to generate 3D target tracks on the basis of the acquired tracks in accordance with the three-dimensional track tracking method according to the present invention.

The N target location systems 2 may conveniently comprise:

- one or more radar system(s), e.g. one or more PSR(s) and/or one or more SSR(s); and/or
- one or more radio direction finding system(s);
  and/or
- one or more satellite location terminal(s).

Therefore, the 2D positions and 2D speeds contained in the 2D tracks acquired by the electronic processor 3 may be expressed in slant coordinates $(\rho, \theta; V_\rho, V_\theta)$ and/or bearing coordinates $(\theta, \varphi; V_\theta, V_\varphi)$ and/or geographic coordinates (*lat, long*; $V_{lat}, V_{long}$) and/or Cartesian coordinates $(x, y; V_x, V_y)$, and the 3D positions and 3D speeds contained in the 3D tracks acquired by the electronic processor 3 may be expressed in spherical coordinates $(\rho, \theta, \varphi; V_\rho, V_\theta, V_\varphi)$ and/or geographic coordinates (*lat, long, alt; $V_{lat}, V_{long}, V_{alt}$*) and/or Cartesian coordinates $(x, y, z; V_x, V_y, V_z)$.

Preferably, the electronic processor 3 in use acquires at least one track generated by a target location system 2 which either directly measures azimuth $\theta$ of the targets, or which provide independent measurements which allow azimuth $\theta$ of the targets to be determined. In other words, the electronic processor 3, in use, preferably acquires at least one track, which comprises a position coordinate related to the azimuth $\theta$ or which comprises at least two independent position coordinates which allow azimuth $\theta$ to be determined.

In particular, the electronic processor 3, in use, may conveniently acquire at least one track expressed in slant or bearing or spherical coordinates.

According to the above description and to figure 1, the three-dimensional target tracking system 1 has an architecture in which the 3D tracking occurs on calculation centre level.

Hereinafter, for description simplicity and without loosing in generality, the method according to the present invention will be described with reference to only two 2D and/or 3D location systems (i.e. with *N=2*). It remains understood, however, that the method according to present invention may be applied to 2D and/or 3D tracks generated by any number $N$ of 2D and/or 3D location systems, with $N \geq 2$.

Therefore, in order to describe the present invention in detail, there are considered a first 2D or 3D location system, (hereinafter called system A for description simplicity) and a second 2D or 3D location system (hereinafter called system B for description simplicity again) which are positioned so as to have a shared coverage region, in which one or more targets are detected, system A generating a respective first 2D or 3D track and system B generating a respective second 2D or 3D track. In accordance with the three-dimensional target tracking method according to the present invention, a correlation test based on a calculation of the height of the targets is carried out on the first and second tracks to check whether and which tracks belong to same real targets while calculating at the same time the respective heights in a single three-dimensional reference system.

In other words, on the basis of kinematic data generated by at least two target location systems having a shared coverage region, the 2D and/or 3D tracks belonging to a same target present in said shared coverage region can be correlated according to the present invention so as to calculate a respective height in a single three-dimensional reference system, and preferably also the height component of the respective speed.

In particular, the three-dimensional tracking method according to the present invention allows a fused 3D track to be determined in which kinematics, i.e. position and speed, of a target present in the coverage region shared by at least two 2D location systems is complemented by the third dimension and calculated taking into account kinematics of the 2D tracks generated by said 2D location systems, thereby allowing the correlation, prediction and identification of the category, i.e. surface or air, of the fused 3D track to be improved. Therefore, the three-dimensional target tracking method according to the present invention allows a target with 3D kinematics to be identified as result of a fusion between two or more 2D tracks expressed in slant and/or bearing and/or geographic and/or Cartesian coordinates.

Furthermore, the three-dimensional target tracking method according to the present invention allows a single fused 3D track to be determined on the basis of two or more 3D tracks expressed in spherical and/or geographical and/or Cartesian coordinates.

Threfore, resuming the detailed description of the present invention, systems $A$ and $B$ may be either both positioned on the ground, also at different heights, or one of said systems may be installed on moving means with a motion considered inertial, except for appropriate corrections (i.e. which can be approximated to a uniform rectilinear motion in the interval of time significant for 2D or 3D measurement, e.g. in the case of a radar, the scanning period $T$, typically from $1$ to $10$ seconds, at which the apparatus monitors and sends data), e.g. a ship or a satellite, while the other is positioned on the ground, or both said systems A and B can be installed on moving means, e.g. ships or satellites. Indeed, the application of the three-dimensional target tracking method according to the invention is possible also when one or more target location systems are installed on respective moving means because, if the kinematics of the moving means are known, the kinematics of the 2D and/or 3D tracks may be corrected on the basis of pitch, roll and yaw movements of the moving means.

In the case of means the motion of which is not completely expectable, such as a ship, the approximating inertia system remarks apply to the case of motion of robotized means (satellite or means on pre-set trajectories with known algorithms) the trajectory of which is perfectly known in time and space in each instant, i.e. with known motion equations.

Therefore, for means with variable motion, it is always possible to make the due corrections to the kinematics of a target seen from a target location system installed on said means.

Systems $A$ and $B$ are preferably positioned so that their respective distance $D$ is equal to, or higher than, a maximum linear measuring error $Err_{MAX}$ of said systems, i.e. using a mathematical formalism, the distance $D$ between the systems $A$ and $B$ satisfied the following mathematical constrain:

$$Err_{MAX} \leq D \ . \qquad\qquad (1)$$

In particular, if $Err_{A-MAX}$ is the maximum linear measuring error of system $A$ and $Err_{B-MAX}$ is the maximum linear measuring error of system $B$, then $Err_{MAX}$ is equal to the greater of $Err_{A-MAX}$ and $Err_{B-MAx}$, i.e. using a mathematical formalism:

$$Err_{MAX} = \max\left[Err_{A-MAX}, Err_{B-MAX}\right]$$

The measuring error shape of a measuring apparatus is known to depend on the nature of measured datum. For example, in the case of a PSR, the manner of "seeing" space is not isomorphous but polarly distorted instead. In other words, a PSR generally has, for range measurements, a constant range measuring error $\delta\rho$ and, for azimuth measurements, a constant azimuth measuring error $2\sigma_\theta$ which, however, give rise to a total measuring error which, for a target "seen" by the PSR under the same azimuth angle equal to the measuring error in azimuth $2\sigma_\theta$, varies according to the distance of said target from the PSR.

In particular, in a PSR, the total measuring error is greater in amplitude the farther the target to be located is from the centre of the PSR.

For a better understanding of the maximum linear measuring error of a PSR, figure 2 schematically shows how the total measuring error of a PSR 5, having a constant $\delta\rho$ range measuring error and a constant azimuth $2\sigma_\theta$ measuring error, varies according to the distance from the PSR 5 of a target 6 "seen" by PSR 5 on a reference plane under the same azimuth angle equal to the azimuth measuring error $2\sigma_\theta$, i.e. "seen" by PSR 5 on the reference plane in a circular section identified by an angle which is equal to the azimuth measuring error $2\sigma_\theta$ and which has the PSR 5 as vertex, said reference plane being perpendicular to the rotation axis (not shown in figure 2) of the PSR 5.

In particular, figure 2 shows, for each distance of the target 6 from the PSR 5, a respective total measuring error which is represented by a respective portion of said circular sector indicated with reference numerals 7, 8, 9 and 10, respectively.

Therefore, if the system $A$ is a PSR which has an azimuth measuring error $2\sigma_{\theta A}$ and a maximum coverage $C_{A\text{-}MAX}$, then the maximum linear measuring error $Err_{A\text{-}MAX}$ of the PSR A is equal to the angular error rectified at the maximum coverage distance $C_{A\text{-}MAX}$, i.e. is equal to $2\sigma_{\theta A}C_{A\text{-}MAX}$. Similarly, if the system $B$ is a PSR which has an azimuth measuring error $2\sigma_{\theta B}$ and a maximum coverage $C_{B\text{-}MAX}$, then the maximum linear measuring error $Err_{B\text{-}MAX}$ of the PSR $B$ is equal to the angular error rectified at the maximum coverage distance $C_{B\text{-}MAX}$, i.e. is equals to $2\sigma_{\theta B}C_{B\text{-}MAX}$.

Therefore, on the basis of the previous description and assuming that

$$Err_{MAX} = 2\widetilde{\sigma}_{\vartheta}\widetilde{C}_{MAX} = \max\left[Err_{A\text{-}MAX}, Err_{B\text{-}MAX}\right],$$

the PSRs $A$ and $B$ are preferably positioned so that their reciprocal distance $D$ satisfies the mathematical constraint (1) that, in the assumption of two PRSs, becomes:

$$2\widetilde{\sigma}_{\theta}\widetilde{C}_{MAX} \le D, \qquad\qquad (2a)$$

where $2\sigma_{\vartheta}$ denotes the azimuth measuring error of the PSR having the highest maximum linear measuring error between the PSRs $A$ and $B$ and $\widetilde{C}_{MAX}$ denotes the maximum coverage of the PSR having the highest maximum linear measuring error between the PSRs $A$ and $B$.

For example, if $\widetilde{C}_{MAX}$ is equal to *100* Km and $2\sigma_{\vartheta}$ is equal to *0.005 rad,* i.e. approximately *0.3°*, then the distance $D$ between the PSRs $A$ and $B$ is equal to, or greater than, 1 Km.

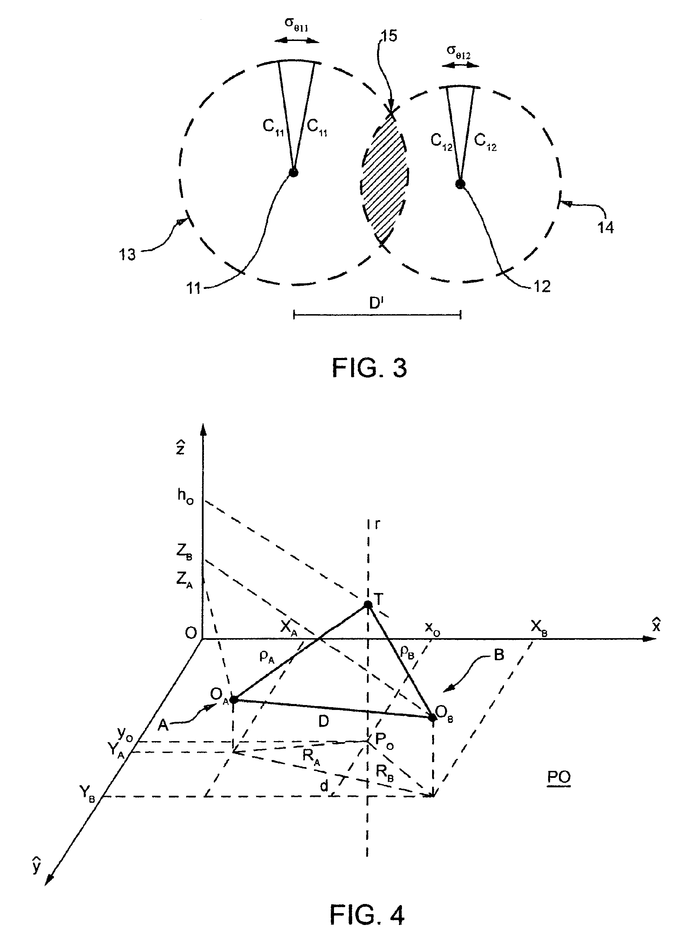

With this regard, figure 3 schematically shows on a reference plane a first PSR 11 having a first azimuth measuring error $2\sigma_{\theta 11}$ and a first maximum coverage $C_{11}$ and a second PSR 12 having a second azimuth measuring error $2\sigma_{\theta 12}$ and a second maximum coverage $C_{12}$, which are distanced by a distance $D$ such as to satisfy the mathematical constraint (2a), said reference plane being perpendicular to the rotation axes (not shown in figure 3) of the first PSR 11 and of the second PSR 12 (said rotation axes, in the example shown in figure 3, being assumed parallel to each other). Furthermore, in figure 3, $D'$ indicates the projection on said reference plane of the distance $D$ between the first PSR 11 and the second PSR 12.

In particular, figure 3 shows a first circle 13 which has as centre the first PSR 11 and as radius the first maximum coverage $C_{11}$ and which thus represents the coverage area of the first PSR 11 on said reference plane, and a second circle 14 which has the second PSR 12 as a centre and the second maximum coverage $C_{12}$ as the radius, and which thus represents the coverage area of the second PSR 12 on said reference plane. Furthermore, again as shown in figure 3, the first circle 13 and the second circle 14 have an intersection 15 which represents a shared coverage region of the PSRs 11 and 12 on said reference plane.

Radio direction finding systems instead display an azimuth measuring error $2\sigma_{\theta}$ which is substantially equal to the elevation measuring error $2\sigma_{\varphi}$. Therefore, if the system $A$ is a radio direction finding system which has an azimuth/elevation measuring error $2\sigma_{A}^{\theta/\varphi}$ and a maximum coverage $C_{A\text{-}MAX}$, then the maximum linear measuring error $Err_{A\text{-}MAX}$ of said system $A$ is equal to the angular error rectified at the maximum coverage distance $C_{A\text{-}MAX}$, i.e. is equal to $2\sigma_{A}^{\theta/\varphi}C_{A\text{-}MAX}$. $C_{A\text{-}MAX}$. Similarly, if the system $B$ is a radio direction finding system which has an azimuth/elevation measuring error $2\sigma_{B}^{\theta/\varphi}$ and a maximum coverage $C_{B\text{-}MAX}$, then the maximum linear mea.suring error $Err_{B\text{-}MAX}$ of said system $B$ is equal to the angular error rectified at the maximum coverage distance $C_{B\text{-}MAX}$, i.e. is equal to $2\sigma_{B}^{\theta/\varphi}C_{B\text{-}MAX}$.

Therefore, on the basis of the previous description and assuming that

$$Err_{MAX} = 2\tilde{\sigma}^{\theta/\varphi}\tilde{C}_{MAX} = \max\left[Err_{A-MAX}, Err_{B-MAX}\right],$$

the radio direction finding systems $A$ and $B$ are preferably positioned so that their reciprocal distance $D$ satisfies the mathematical constraint (1) which, in the assumption of two radio direction finding systems, becomes:

$$2\tilde{\sigma}^{\theta/\varphi}\tilde{C}_{MAX} \leq D, \qquad\qquad (2b)$$

where $2\tilde{\sigma}^{\theta/\varphi}$ denotes the azimuth/ elevation measuring error of the radio direction finding system having the highest maximum linear measuring error radio between the direction finding systems $A$ and $B$ and $\tilde{C}_{MAX}$ denotes the maximum coverage of the radio direction finding system having the highest maximum linear measuring error between the radio direction finding systems $A$ and $B$.

Now, more in detail, mathematical constraint (1) depends on the capacity of the two systems $A$ and $B$ to distinguish two real objects. Therefore, systems $A$ and $B$ may be considered non-homocentric and not co-located if each system and a real object to be tracked can be "seen" in distinct positions by the other system.

In particular, mathematical constraint (1) takes into consideration the maximum linear measuring error $Err_{MAX}$ so as to always ensure the possibility of carrying out a triangulation to determine a three-dimensional track of a target intercepted by the systems $A$ and $B$, independently from the position of said target in the coverage region shared by said systems $A$ and $B$.

In other words, if mathematical constraint (1) is satisfied, the target and the centers of the systems A and B form, within the limits of the maximum linear measuring error $Err_{MAX}$, the three distinguishable vertexes of a triangle.

If, instead, mathematical constraint (1) is not satisfied, the triangle degenerates into two parallel lines coinciding, within the limits of the maximum linear measuring error $Err_{MAX}$, and thus triangulation cannot be applied. In other words, if mathematical constraint (1) is not verified, a target is "seen" by the systems $A$ and $B$ under the same perspective.

Therefore, the correlation test is preferably carried out on the basis of the 2D and/or 3D tracks generated by the systems A and B only if the distance $D$ between said systems A and B satisfies the mathematical constraint (1).

Hereinafter, in order to describe the present invention in detail, it is assumed that:

- $ST_A(\rho_A, \theta_A; V_{\rho A}, V_{\theta A})$ is a first *2D* slant track of a first target at time $t$ in a first relative reference system of the system $A$ generated by said system $A$; and
- $ST_B(\rho_B, \theta_B; V_{\rho B}, V_{\theta B})$ is a second *2D* slant track of a second target at time $t$ (i.e. at the same time $t$ of the first *2D* slant track $ST_A$) in a second relative reference system of the system $B$ generated by said system $B$.

Therefore, according to a preferred embodiment of the present invention, a test is carried out on tracks $ST_A$ and $ST_B$, which are related to the same time t, to check whether they are related to a same single target. Furthermore, if the tracks $ST_A$ and $ST_B$ related to a same single target, the present invention allows the height of said target to be also calculated, while carrying out said correlation test.

In particular, the correlation test is verified by the tracks $ST_A$ and $ST_B$ if the following three conditions are satisfied:

1. the position vectors of the tracks $ST_A$ and $ST_B$, if projected on a reference plane intersect ("intersection-related condition");

2. the moduli of the position vectors of the tracks $ST_A$ and $ST_B$ and the distance $D$ between the centers of the systems $A$ and $B$ satisfy a triangle-inequality-related condition, which, by using a mathematical formalism, is expressed by the following mathematical inequality:

$$\left\|\overline{P}_A\right| + \left|\overline{P}_B\right\| \geq D \pm \delta\rho, \qquad\qquad (3)$$

where $\overline{P}_A$ is the position vector contained in the first *2D* slant track $ST_A$, $\overline{P}_B$ is the position vector contained in the second *2D* slant track $ST_B$ and $\delta\rho = \delta\rho_A + \delta\rho_B$, where $\delta\rho_A$ is the range measuring error of the system $A$ and $\delta\rho_B$ is the range measuring error of the system $B$; and

3. the tracks $ST_A$ and $ST_B$ allow a same height to be determined for the first target and for the second target ("elevation-related condition").

If all three above conditions are satisfied by the tracks $ST_A$ and $ST_B$, then the correlation test is verified and, therefore, the tracks $ST_A$ and $ST_B$ relate to a same single target for which a *3D track MST ($\rho$, $\theta$, $\varphi$; $V_\rho$, $V_\theta$, $V_\varphi$)* at the time *t* in an absolute reference system *O* is also generated.

Figure 4 schematically shows an absolute reference system *O* used to carry out the correlation test of the tracks $ST_A$ and $ST_B$ according to said preferred embodiment of the present invention.

In particular, as shown in figure 4, the absolute reference system *O* is a system of three-dimensional Cartesian coordinates *zxy*.

In detail, figure 4 shows:

- a point $O_A$, which represents the centre of the system A the coordinates ($X_A$, $Y_A$, $Z_A$) of which are known in the absolute reference system *O*;
- a point $O_B$, which represents the centre of the system *B* the coordinates ($X_B$, $Y_B$, $Z_B$) of which are known in the absolute reference system *O*;
- a line *r* which

  - represents an intersection line between the rotation planes (not shown in figure 4) of the systems *A* and *B* passing through the position vectors of the tracks $ST_A$ and $ST_B$,
  - identifies a direction vertical to the surface of the Earth, and
  - passes through a point *T* which, if the tracks $ST_A$ and $ST_B$ satisfy the correlation test, represents the first target seen by system *A* and the second target seen by system *B*, is at a distance $\rho_A$ (range of the first target in the first *2D* slant track $ST_A$) from the system A and at a distance $\rho_B$ (range of the second target in the second *2D* slant track $ST_B$) from the system B and has coordinates ($x_0$, $y_0$, $h_0$) in the absolute reference system *O*; the axis $\hat{z}$ of the absolute reference system *O* being parallel to line *r*,

- a horizontal reference plane *PO* which is perpendicular to line *r* and thus to axis $\hat{z}$ of the absolute reference system *O* as well, and which is conventionally positioned at *z=0*;
- a point $P_0$ which has coordinates ($x_0$, $y_0$, 0) in the absolute reference system *O* and which represents the intersection on the horizontal reference plane PO of the position vectors contained in tracks $ST_A$ and $ST_B$ projected on said horizontal reference plane *PO*; in figure 4, the projections on the horizontal reference plane *PO* of the position vectors contained in tracks $ST_A$ and $ST_B$ being indicated with $R_A$ and $R_B$, respectively; and
- the distance *D* between the systems *A* and *B* having a projection *d* on the horizontal reference plane *PO*.

Again with reference to the above description and to figure 4, with regards to the intersection-related condition, the *2D* position vectors contained in tracks $ST_A$ and $ST_B$, if projected on the horizontal reference plane *PO* must have a non-null intersection (i.e. $P_0$ ($x_0$, $y_0$, 0)) in order to be related to a same single target.

Therefore, in order to verify whether said intersection condition is satisfied or not, the method attempts to determine the Cartesian coordinates ($x_0$, $y_0$) of the intersection point $P_0$ of the position vectors of the tracks $ST_A$ and $ST_B$ projected on the horizontal reference plane *PO* by solving the following linear system of two equations in two unknowns:

$$\begin{cases} x_0 - X_A = m_A^O (y_0 - Y_A) \\ x_0 - X_B = m_B^O (y_0 - Y_B) \end{cases} \quad (4)$$

where

$$m_A^O = tg\theta_A \quad (5)$$

and

$$m_B^O = tg\theta_B .\qquad\qquad (6)$$

Therefore, with the *2D* slant coordinates ($\rho_A$, $\theta_A$) and thus the azimuth $\theta_A$ of the first target, the *2D* slant coordinates ($\rho_B$, $\theta_B$) and thus the azimuth $\theta_B$ of the second target, the Cartesian coordinates *($X_A$, $Y_A$)* of the centre $O_A$ of the system *A* in the absolute reference system *O* and the Cartesian coordinates *($X_B$, $Y_B$)* of the centre $O_B$ of the system *B* in the absolute reference system *O* being known, determining the Cartesian coordinates ($x_0$, $y_0$) of the intersection point $P_0$ of the position vectors of tracks $ST_A$ and $ST_B$ projected on the horizontal reference plane *PO* is possible.

In particular, the intersection condition is verified, i.e. is satisfied by the 2D slant tracks $ST_A$ and $ST_B$, if said Cartesian coordinates ($x_0$, $y_0$) of the intersection point $P_0$ can be calculated.

If even only one of the two 2D tracks is a 2D bearing track $ST$ ($\theta$, $\varphi$; $V_\theta$, $V_\varphi$), the mathematical formulae (4), (5) and (6) are still valid, and thus may still be used to verify the intersection condition.

Furthermore, again according to said preferred embodiment of the present invention, if the intersection-related condition is satisfied by the tracks $ST_A$ and $ST_B$, the method goes on to checking the triangle-inequality-related condition, i.e. checks whether the position vectors *2D* contained in the tracks $ST_A$ and $ST_B$ and the distance *D* between the centers $O_A$ and $O_B$ of the systems *A* and *B* satisfy the triangle inequality (3) or not.

In particular, again with reference to that shown in figure 4, the triangle inequality (3) becomes:

$$\rho_A + \rho_B \geq D \pm \delta\rho ,\qquad\qquad (7)$$

that is

$$\rho_A + \rho_B \geq \sqrt{(X_A - X_B)^2 + (Y_A - Y_B)^2 + (Z_A - Z_B)^2} \pm \delta\rho .$$

Therefore, with the range measurements $\rho_A$ and $\rho_B$ of the tracks $ST_A$ and $ST_B$, the Cartesian coordinates ($X_A$, $Y_A$, $Z_A$,) of the centre $O_A$ of the system *A* in the absolute reference system *O*, the Cartesian coordinates ($X_B$, $Y_B$, $Z_B$) of the centre $O_B$ of the system *B* in the absolute reference system *O*, the range measuring error $\delta\rho_A$ of the system A and the range measuring error $\delta\rho_B$ of the system *B* (noting again $\delta\rho = \delta\rho_A + \delta\rho_B$) being known, checking whether the triangle-inequality-related condition is satisfied by the tracks $ST_A$ and $ST_B$ is possible, i.e. whether the moduli of the position vectors *2D* contained in the tracks $ST_A$ and $ST_B$ and the distance *D* between the centers $O_A$ and $O_B$ of the systems *A* and *B* satisfy the triangle inequality.

If even only one of the two 2D tracks is a *2D* bearing track $ST(\theta,\varphi; V_\theta, V_\varphi)$, checking whether the condition (7) is satisfied by the two tracks or not is still possible. Indeed, assuming for example that the system A is a radio direction finding system which thus supplies a 2D bearing track $ST_A$ ($\theta_A$, $\varphi_A$; $V_{\theta A}$, $V_{\varphi A}$), it is possible to compute:

$$R_A = \sqrt{(x_0 - X_A)^2 + (y_0 - Y_A)^2} ,$$

$$\frac{R_A}{\cos\varphi_A} ,$$

and

$$\delta\rho_A = \partial\left(\frac{R_A}{\cos\varphi}\right)_{\varphi=\varphi_A} \delta\varphi_A ,$$

where:

- $\delta\rho_A$ is the elevation measuring error of the system $A$, and

$$- \quad \partial\left(\frac{R_A}{\cos\varphi}\right)_{\varphi=\varphi_A}$$

indicates the first derivative of

$$\frac{R_A}{\cos\varphi}$$

with respect to $\varphi$ calculated for $\varphi=\varphi_A$.

Therefore, in the case of one or more 2D bearing track(s), checking whether condition (7) is satisfied or not is still possible.

Furthermore, again according to said preferred embodiment of the present invention, if the triangle-inequality related condition is satisfied by the tracks $ST_A$ and $ST_B$, then the method goes on to checking the elevation-related condition, i.e. checks whether the tracks $ST_A$ and $ST_B$ allow a same height to be determined for the first and second targets.

In particular, again with reference to that shown in figure 4, it results that:

$$\left(\rho_A\right)^2 = \left(R_A\right)^2 + \left(h_O - Z_A\right)^2 \tag{8}$$

) and

$$\left(\rho_B\right)^2 = \left(R_B\right)^2 + \left(h_O - Z_B\right)^2 \tag{9}$$

where $h_O$ denotes a possible same height of the first and second targets and where

$$\left(R_A\right)^2 = \left(x_0 - X_A\right)^2 + \left(y_0 - Y_A\right)^2 \tag{10}$$

and

$$\left(R_B\right)^2 = \left(x_0 - X_B\right)^2 + \left(y_0 - Y_B\right)^2 . \tag{11}$$

Therefore, if the first and the second targets have the same height $h_O$ and thus they are not two different targets but actually represent a same single target, thus solving the two second degree equations (8) and (9) having as unknown $h_O$, it must result that

$$h_O = Z_A \pm \sqrt{\left(\left(\rho_A\right)^2 - \left(R_A\right)^2\right)} = Z_B \pm \sqrt{\left(\left(\rho_B\right)^2 - \left(R_B\right)^2\right)} . \tag{12}$$

Therefore, with the range measurements $\rho_A$ and $\rho_B$ of the tracks $ST_A$ and $ST_B$, the Cartesian coordinates $(X_A, Y_A, Z_A)$ of the centre $O_A$ of the system $A$ in the absolute reference system O, the Cartesian coordinates $(X_B, Y_B, Z_B)$ of the centre $O_B$ of the system $B$ in the absolute reference system O and the Cartesian coordinates $(x_0, y_0)$ of the point $P_0$

(calculated for checking the intersection-related condition) being known, it is possible to:

- solve the second degree equation (8) with the aid of equation (10), and thus determine two first values of $h_0$ for the first target seen by the system $A$ and tracked in the track $ST_A$, ; and
- solve the second degree equation (9) with the aid of the equation (11), and thus determine two second values of $h_o$ for the second target seen by the system $B$ and tracked in the track $ST_B$.

Threfore, if one of the two first values of $h_o$ is equal to one of the two second values of $h_o$, it results that:

- the elevation-related condition is satisfied by the tracks $ST_A$ and $ST_B$, and thus the correlation test is also satisfied by the tracks $ST_A$ and $ST_B$; and
- the first and second targets represent a same single target which has the Cartesian coordinates $(x_o, y_o, h_o)$ in the absolute reference system $O$, where $h_0$ assumes the same value determined for both targets, i.e. the value which satisfies equality (12).

Furthermore, on the basis of the height value $h_0$ which satisfies equality (12), the elevation angles $\varphi_A$ and $\varphi_B$ at which the same single target is seen in the first relative reference system of the system A and in the second relative reference system of the system B, respectively, can be calculated.

In particular, it results that:

$$\varphi_A = \arcsin\left(\frac{h_0 - Z_A}{\rho_A}\right),$$

and

$$\varphi_B = \arcsin\left(\frac{h_0 - Z_B}{\rho_B}\right).$$

If even only one of the two 2D tracks is a 2D bearing track $ST(\theta, \varphi; V_\theta, V_\varphi)$ checking whether the elevation-related condition is satisfied by the two tracks or not is still possible. Indeed, assuming for example that the system A is a radio direction finding system and that it thus supplies a 2D bearing track $ST_A(\theta_A, \varphi_A; V\theta_A, V\varphi_A)$, it is possible to compute:

$$R_A = \sqrt{(x_0 - X_A)^2 + (y_0 - Y_A)^2} ;$$

and

$$\rho_A = \frac{R_A}{\cos\varphi_A} .$$

Therefore, in the case of one or more 2D bearing tracks, mathematical formulae (8), (9), (10), (11) and (12) may still be used to verify whether the elevation-related condition is satisfied or not. Furthermore, if said elevation-related condition, is satisfied, the height $h_o$ of the same single target seen by the two systems A and B is also determined.

If one of the two 2D tracks is instead a 2D track expressed in Cartesian or geographic coordinates, a correlation test may be carried out, which is different from that described above with regards to two slant and/or bearing tracks .

In particular, for example, assuming that the system A is a Satellite location terminal which provides a 2D track of a first target expressed in geographic $ST_A(lat, long; V_{lat}, V_{long})$ or Cartesian $ST_A(x_A, Y_A; V_{xA}, V_{yA})$ coordinates, the following may be calculated:

- the coordinates $(X_A, Y_A)$ in the absolute reference system $O$ of the origin of the geographic/Cartesian system used by the system A, i.e. the coordinates $(X_A, Y_A)$ in the absolute reference system $O$ of the origin of the geographic/Cartesian reference system in relation to which the geographic *(lat, long)* or Cartesian $(x_A, y_A)$ position of the first target contained in the first 2D track $ST_A$ provided by the satellite location terminal A is expressed; and

- the Cartesian coordinates $(x_A^O, y_A^O)$ of the first target in the absolute reference system $O$ on the basis of the coordinates $(X_A, Y_A)$ and of the geographic/Cartesian coordinates *(lat, long)* / $(x_A, y_A)$, e.g. by using the following coordinate shift

$$x_A^O = lat + X_A \longrightarrow \overset{Cart}{\left( x_A^O = x_A + X_A \right)},$$

and

$$y_A^O = long + Y_A \longrightarrow \overset{Cart}{\left( y_A^O = y_A + Y_A \right)}.$$

In order to check the intersection-related condition, the method thus imposes that the Cartesian coordinates $(x_0, y_0)$ of the point $P_0$ are equal to the Cartesian coordinates $(x_A^O, y_A^O)$ of the first target in the absolute reference system $O$.

Furthermore, in order to check whether the intersection-related condition is satisfied or not, in the assumption that, for example, system B is a PSR and that it thus provides the 2D track slant $ST_B(\rho_B, \theta_B; V\rho_B, V\theta_B)$ of the second target, the method verifies whether the following mathematical relation is satisfied:

$$x_A^O - X_B = m_B^O \left( y_A^O - Y_B \right), \qquad\qquad (13)$$

where $m_B^O = tg\,\theta_B$.

Therefore, the intersection-related condition is verified, i.e. it is satisfied by the 2D tracks $ST_A$ and $ST_B$, if the mathematical relation (13) is satisfied.

If the system B is a radio direction finding system, and thus the respective 2D track is a bearing track $ST_B$ $(\theta_B, \varphi_B; V_{\theta B}, V_{\varphi B})$, the mathematical relation (13) is still valid and thus can still be used for verifying the intersection-related condition.

In case of a 2D track expressed in Cartesian or geographic coordinates, the correlation test does not comprise the verification of the triangle-inequality-related condition, but directly includes the verification of the elevation-related condition, in particular a direct calculation of the height.

In detail, to find the height $h_0$ if, for example, the system A is a satellite location terminal and the system B is a PSR, the following second degree equation is solved:

$$h_O = Z_B \pm \sqrt{\left( (\rho_B)^2 - (R_B)^2 \right)}, \qquad\qquad (14)$$

where $(R_B)^2 = \left( x_A^O - X_B \right)^2 + \left( y_A^O - Y_B \right)^2$.

Instead, to find the height $h_o$ if the system A is a satellite location terminal and the system $B$ is a radio direction finding system, the equation (14) is solved again, in which $\rho_B$ is calculated as :

$$\rho_B = \frac{R_B}{\cos\varphi_B} \; .$$

Two $h_o$ values are obtained by solving the equation (14): one corresponding to the plus sign and the other to the minus sign of the formula (14). In order to determine the height, running domain considerations is needed to choose the right physical solution. For example, the case of negative height may be excluded and the solution can be compared with the previous prediction data.. Alternatively, if one of the two tracks is a 3D track, the height coordinate contained in said 3D track can be used to choose the correct height value $h_0$.

Furthermore, a first particular case when carrying out the correlation test occurs if systems $A$ and $B$ see the same target along a symmetry line, i.e. using a mathematical formalism, when $Z_A=Z_B$ and $\rho_A=\rho_B$.

In said first particular case, $R_A=R_B$ and $h_0$ may assume two values, one corresponding to the plus sign and other to the minus sign of formula (12).

In order to determine the height in said first particular case, running domain considerations is needed to choose the right physical solution. For example, the case of negative height may be excluded and the solution may be compared with the previous prediction data. Alternatively, if one of the two tracks is a 3D track, the height coordinate contained in said 3D track may be used to choose the correct height value $h_0$.

Furthermore, a second particular case when carrying out the correlation test occurs if systems A and B see a same target in a same direction, i.e. using a mathematical formalism, when $m_A^O = m_B^O$ .

In particular, if during verification of the intersection-related condition, it is found that $m_A^O = m_B^O$ , it is decided that said intersection-related condition is satisfied by the tracks $ST_A$ and $ST_B$, and the method thus goes on to verifying the triangle-inequality-related condition without calculating the Cartesian coordinates $(x_o, y_o)$ of the intersection point $P_0$.

If also the triangle-inequality-related condition is satisfied by the tracks $ST_A$ and $ST_B$, then the method goes on to verifying the elevation-related condition by determining the elevation angles $\varphi_A$ and $\varphi_B$ by means of a triangulation carried out on a reference plane zx perpendicular to the surface of the Earth and passing through the centre $O_A$ of the system $A$ and the centre $O_B$ of the system $B$.

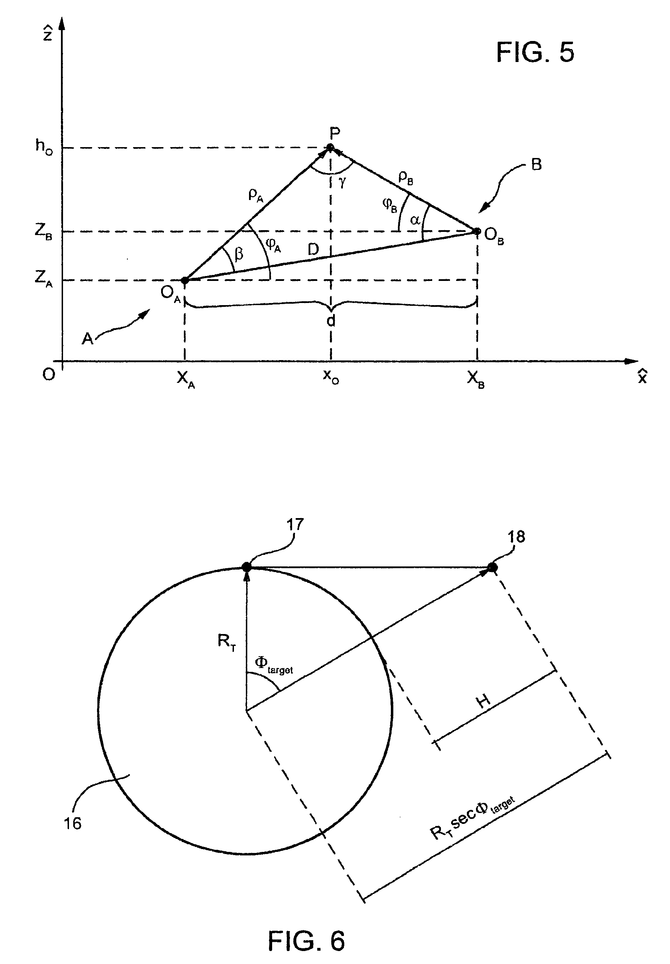

With this regard, figure 5 schematically shows a Cartesian reference plane $zx$ used for verifying the height-related condition if $m_A^O = m_B^O$ according to a further preferred embodiment of the present invention.

In particular, figure 5 shows:

- a point $O_A$, which represents the centre of the system A the coordinates $(X_A, Z_A)$ of which are known on the Cartesian reference plane zx;
- a point $O_A$, which represents the centre of the system B the coordinates $(X_B, Z_B)$ of which are known on the Cartesian reference plane zx;
- a point $P$ which, if tracks $ST_A$ and $ST_B$ satisfy the elevation-related condition, represents the first target seen by the system $A$ and the second target seen by the system $B$, is at a distance $\rho_A$ from the system $A$ and at a distance $\rho_B$ from the system B and has coordinates $(x_0, h_0)$ on the Cartesian reference plane $zx$;
- a distance $D$ between the centre $O_A$ of the system A and the centre $O_B$ of the system $B$ which has a projection $d$ along direction $\hat{x}$ ;
- an angle $\alpha$ comprised between $\rho_B$ and $D$;
- an angle $\beta$ comprised between $\rho_A$ and $D$;
- an angle $\gamma$ comprised between $\rho_A$ and $\rho_B$;
- an angle $\varphi_A$, which represents the elevation angle at which the point $P$ is seen by the system $A$; and
- an angle $\varphi_B$ which represents the elevation angle at which the point $P$ is seen by the system $B$.

In detail, with reference to figure 5 and applying the law of sines, it results that:

$$\frac{\rho_A}{\sin\alpha} = \frac{\rho_B}{\sin\beta} = \frac{D}{\sin\gamma} \; .$$

Furthermore, even applying Carnot's theorem (also known as law of cosenes), it results that:

$$D^2 = (\rho_A)^2 + (\rho_B)^2 - 2\rho_A\rho_B \cos\gamma \; .$$

Threfore, $\rho_A$, $\rho_B$ and $D$ being known, the angles $\alpha$, $\beta$ and y are determined in accordance with the following mathematical formulae obtained on the basis of the two preceding equations obtained by applying the law of sines and Carnot's theorem:

$$\gamma = \arccos\left(\frac{(\rho_A)^2 + (\rho_B)^2 - D^2}{2\rho_A\rho_B}\right) ,$$

$$\alpha = \arcsin\left(\frac{\rho_A \sin\gamma}{D}\right)$$

and

$$\beta = 180° - \alpha - \gamma \; .$$

Finally, since

$$\varphi_A - \beta = \alpha - \varphi_B$$

and

$$D\cos(\varphi_A - \beta) = d \; ,$$

the elevation angles $\varphi_A$ and $\varphi_B$ may be determined on the basis of the following formulae:

$$\varphi_B = \alpha - \arccos\left(\frac{d}{D}\right)$$

and

$$\varphi_A = \arccos\left(\frac{d}{D}\right) + \beta \; .$$

Therefore, again with reference to figure 5, in the case of $m_A^O = m_B^O$ , the elevation-related condition is satisfied by the tracks $ST_A$ and $ST_B$, and also the correlation test is thus satisfied by the tracks $ST_A$ and $ST_B$, if it results that:

$$h_O = \rho_A \sin\varphi_A + Z_A = \rho_B \sin\varphi_B + Z_B \ .$$

Once the correlation test has finished, if it was verified that said correlation test is satisfied by the tracks $ST_A$ and $ST_B$, a *3D* speed is also preferably determined on the basis of the tracks $ST_A$ and $ST_B$ and, in particular, if the two tracks $ST_A$ and $ST_B$ are 2D tracks, a respective elevation component of the respective speed contained in the *2D* track is determined for each of the two *2D* tracks $ST_A$ and $ST_B$.

In this regard, it is assumed that:

- $\overline{V}_A$ is a first target speed vector (it is emphasized that, because the correlation test is satisfied by tracks $ST_A$ and $ST_B$, the first target seen by the system A and tracked in the first *2D* slant track $ST_A$ is the same target, i.e. the second target, seen by the system *B* and tracked in the second *2D* slant track $ST_B$) in spherical coordinates in the first relative reference system of the system *A* and comprises a first range component $V\rho_A$ which is contained in the first *2D* slant track $ST_A$, a first azimuth component $V_{\theta A}$ which is contained in the first *2D* slant track $ST_A$ and a first elevation component $V_{\varphi A}$ which is intended to be calculated;
- $\overline{V}_B$ is the second target speed vector in spherical coordinates in the second reference system of the system *B* and comprises a second range component $V\rho_B$ which is contained in the second *2D* slant track $ST_B$, a second azimuth component $V_{\theta B}$ which is contained in the second *2D* slant track $ST_B$ and a second elevation component $V_{\varphi B}$ which is intended to be calculated;

- $\overline{V}$ is a third target speed vector in Cartesian coordinates in the absolute reference system *O* and comprises a first speed component $V_x$ along direction $\hat{x}$, a second speed component $V_y$ along direction $\hat{y}$ and a third speed component $V_z$ along direction $\hat{z}$;
- $I_A$ is a first transformation matrix of spherical coordinates to Cartesian coordinates of the first speed vector $\overline{V}_A$ in a first position $(\rho_A,\ \theta_A, \varphi_A)$ which represents the position of the target in spherical coordinates in the first relative reference system of the system *A*, $\varphi_A$ being the elevation angle in the first relative reference system of the system *A* calculated in the correlation test, $\theta_A$ being the azimuth angle contained in the first *2D* slant track $ST_A$, and $\rho_A$ being the range contained in the first *2D* slant track $ST_A$; and
- $I_B$ is a second transformation matrix of spherical coordinates to Cartesian coordinates of the second speed vector $\overline{V}_B$ in a second position $(\rho_B, \theta_B, \varphi_B)$ which represents the position of the target in spherical coordinates in the second relative reference system of the system *B*, $\varphi_B$ being the elevation angle in the second relative reference system of the system *B* calculated in the correlation test, $\theta_B$ being the azimuth angle contained in the second *2D* slant track $ST_B$, and $\rho_B$ being the range contained in the second *2D* slant track $ST_B$.

Therefore, on the basis of the above description:

- in the first position $(\rho_A,\ \theta_A,\ \varphi_A)$ $\overline{V} = I_A\overline{V}_A$; and
- in the second position $(\rho_B, \theta_B, \varphi_B)$ $\overline{V} = I_B\overline{V}B$.

Furthermore, because the first position $(\rho_A, \theta_A, \varphi_A)$ and the second position $(\rho_B,\ \theta_B,\ \varphi_B)$ coincide in the absolute reference system *O* within the measuring error limits, it must result that:

$$I_A\overline{V}_A \ = \ I_B\overline{V}_B \qquad\qquad (15)$$

Therefore, solving the three equation system represented by the matrix equation (15), the first elevation component $V_{\varphi A}$ and the second elevation component $V_{\varphi B}$ is determined.

Finally, once the first elevation component $V_{\varphi A}$ and the second elevation component $V_{\varphi B}$ have been determined, the third vector $\overline{V}$ and, in particular, the respective third speed component $V_z$ may be determined by applying equation $\overline{V} = I_A\overline{V}_A$ or equation $\overline{V} = I_B\overline{V}_B$.

Preferably, the first relative reference system of the system *A*, the second relative reference system of the system *B* and the absolute reference system *O* have the same orientation with the respective vertical axis to the respective zenith and axis *y* oriented to the North.

In particular, the first relative reference system of the system *A*, the second relative reference system of the system *B* and the absolute reference system *O* have the same orientation, with the respective vertical axis to the respective zenith and axis *y* oriented to the North, if the distance *D* between the systems A and B does not exceed 25 *Km*.

If the first relative reference system of the system *A,* the second relative reference system of the system *B* and the absolute reference system *O* has the same orientation with the respective vertical axis of the respective zenith and axis *y* oriented to the North, the Earth may be approximated to a plane, the zeniths of the relative reference systems of the systems *A* and *B* may be considered parallel, and North may be considered in common at low latitudes.

If, instead, the distance D between the systems *A* and *B* exceeds *25 Km,* geocentric coordinates are then preferably used or the orientations of the relative reference systems are corrected by means of Euler angles.

According to the above description, the present invention allows a *3D* track to be determined as fusion of two or more *2D* or 3D tracks which come from different target location systems, relate to a same instant in time and which, if they satisfy the correlation test, are deemed to relate to a same real object.

The three-dimensional target tracking method according to the present invention finds advantageous, but not exclusive application in maritime, land and air surveillance.

In detail, in the scope of maritime surveillance, if the 2D target location systems used are dedicated to detecting only naval surface tracks, the three-dimensional tracking method according to the present invention allows possible air tracks to be ignored. Indeed, the correlation of the kinematics of a target with the calculation of the height allows ambiguity to be solved if aircrafts flying at low height, e.g. helicopters or airplanes, which appear on the horizon, interfere with the naval surface tracks.

Furthermore, in land surface, e.g. in airports, the three-dimensional tracking method according the present invention allows low height air tracks to be discriminated and located with greater accuracy during landing and take-off in the airport maneuvering areas.

Finally, in air surveillance, the three-dimensional tracking method according to the present invention allows aircraft air tracks to be discriminated and located with greater accuracy. For example, the present invention could be advantageously exploited to provide a portable air surveillance system which, by only using *2D* targets, is capable of locating *3D* air tracks with accuracy.

For the application of the present invention to maritime, land and air surveillance it is meaningful to discriminate between *3D* tracks belonging to the land or air domain.

In this regards, figure 6 schematically shows:

- a circle 16 which represent the Earth; and
- a *2D* target location system 17 which

  - is positioned on the surface of the Earth 16, and is thus at a distance $R_T$ from the centre of the Earth 16, where $R_T$ represents the radius of the Earth 16,
  - detects at a distance $\rho$ a target 18 which is positioned at a distance, i.e. at a height, *H* from the surface of the Earth 16, and
  - has a maximum linear measuring angle $Err_{MAX}$; and

- a $\Phi_{target}$ angle which has vortex in the centre of the Earth. 16, and which is subtended between the position of the *2D* target location system 17 and the position of the target 18.

As shown in figure 6:

$$H = R_T \sec \Phi_{target} - R_T$$

Reference is preferably made to the surface search domain if the size order of height H of target 18 is:

$$H = R_T \sec \Phi_{target} - R_T \leq Err_{MAX} \ .$$

Therefore, in maritime and land surveillance, given a first *2D* track of a first *2D* location system, the *2D* tracks of a second location system *2D* which may be correlated with said first *2D* track may be conveniently sought about a first *2D* track, because the position of the target seen by both *2D* location systems falls within a limited correlation window which depends on the *2D* location system error and on the history of the target. For example, primary coastal or naval radars may import the height calculation without needing to modify the criteria to search the tracks which may be correlated, which criteria are limited to the error windows about the first *2D* track.

Furthermore, again preferably, reference is made to air search domain if the order of size of height *H* of the target 18 is:

$$H = R_T \sec \Phi_{target} - R_T > Err_{MAX}$$

Therefore, in air surveillance, the search is carried out on all *2D* tracks . Indeed, in air surveillance, upon arrival of a new *2D* track by a *2D* location system, which must be compared by means of correlation tests with all the *2D* tracks acquired by the other *2D* location systems.

The search criterion for the air domain includes the case of surface domain, which is thus a subset.

Therefore, the three-dimensional tracking method with search criteria on all 2D tracks works in any domain.

The advantages of the invention can be readily understood from the above description.

In particular, it is emphasized once again that the present invention allows a single three-dimensional track of a target present in said shared coverage region to be determined on the basis of kinematic data produced by at least two *2D* or 3D location systems having a shared coverage region.

Furthermore, the three-dimensional target tracking method according to the present invention is applicabl.e to any number N of target location systems, with *N>1*, which may be all positioned on the ground, even at different heights, or may be all installed on respective moving means, or some of which may be installed on respective moving means and others may be positioned on the ground.

**Claims**

1. A three-dimensional target tracking method comprising:

   • acquiring a first track expressed in slant or bearing or spherical coordinates and generated by a first target location system (2, 11, A) having a first coverage area (13), said first track comprising a first position of a first target at a given time in a first relative reference system of the first target location system (2, 11, A);
   • acquiring a second track expressed in slant or bearing or spherical or geographic or Cartesian coordinates and generated by a second target location system (2, 12, B) having a second coverage area (14) partially overlapping the first coverage area (13) in a coverage region (15) shared by the two target location systems (2, 11, 12, A, B), said second track comprising a second position of a second target at the given time in a second relative reference system of the second target location system (2, 12, B); and
   • carrying out a correlation test on the basis of the acquired tracks;

   wherein, if the second acquired track is expressed in slant or bearing or spherical coordinates, the correlation test includes:

   • determining a first direction identified on a reference plane (PO) of a given three-dimensional reference system by the first position and by a position of the first target location system;
   • determining a second direction identified on the reference plane (PO) of the given three-dimensional reference system by the second position and by a position of the second target location system;
   • checking whether the first direction and the second direction intersect with each other or coincide;
   • if the first direction and the second direction intersect with each other or coincide, checking whether the first position, the second position and a given distance (D) between the two target location systems (2, 11, 12, A, B) satisfy a triangle-inequality-related condition;
   • if the first position, the second position and the given distance (D) satisfy the triangle-inequality-related condition, checking whether a same height ($h_o$) is determined for the first target and the second target in the given three-dimensional reference system on the basis of the first position and the second position; and,
   • if a same height ($h_o$) is determined for the first target and the second target in the given three-dimensional reference system, detecting that the first target and the second target represent a same single target (T, P) present in the shared coverage region (15);

   wherein if the second acquired track is expressed in geographic or Cartesian coordinates, the correlation test includes:

   • determining a first direction identified on the reference plane (PO) of the given three-dimensional reference system by the first position and by a position of the first target location system;
   • determining a third position of the second target on the reference plane (PO) of the given three-dimensional reference system on the basis of the second position and of an origin position of the second relative reference system in the given three-dimensional reference system;

• checking whether the first direction passes through the third position;

• if the first direction passes through the third position, checking whether a same height ($h_o$) is determined for the first target and the second target in the given three-dimensional reference system on the basis of the first position and the second position; and,

• if a same height ($h_o$) is determined for the first target and the second target in the given three-dimensional reference system, detecting that the first target and the second target represent a same single target (T, P) present in the shared coverage region (15);

and wherein, if the first target and the second target represent a same single target (T, P) present in the shared coverage region (15), the method further comprises generating a three-dimensional track which comprises a three-dimensional position of said same single target (T, P) at the given time in the given three-dimensional reference system, said three-dimensional position comprising the same height ($h_o$) determined for the first target and the second target in the given three-dimensional reference system.

2. The method of claim 1, wherein the correlation test is carried out if a given distance (D) between the two target location systems (2, 11, 12, A, B) satisfies a given relation with a given maximum linear measuring error of the two target location systems (2, 11, 12, A, B).

3. The method of claim 2, wherein the correlation test is carried out if the given distance (D) is higher than, or equal to, said maximum linear measuring error.

4. The method of claim 3, wherein the given maximum linear measuring error equals the greater of a first maximum linear measuring error of the first target location system (2, 11, A) and a second maximum linear measuring error of the second target location system (2, 12, B).

5. The method according to any preceding claim, wherein, if the second acquired track is expressed in slant or bearing or spherical coordinates, the first position, the second position and the given distance (D) satisfy the triangle-inequality-related condition if a sum of a first distance ($\rho_A$) of the first target from the first target location system (2, 11, A) in the first relative reference system and of a second distance ($\rho_B$) of the second target from the second target location system (2, 12, B) in the second relative reference system is higher than, or equal to, said given distance (D) decreased and increased by a given measuring error of the two target location systems (2, 11, 12, A, B).

6. The method of claim 5, wherein the given measuring error of the two target location systems (2, 11, 12, A, B) is equal to a sum of a first range measuring error of the first target location system (2, 11, A) and of a second range measuring error of the second target location system (2, 12, B).

7. The method according to any preceding claim, wherein the first acquired track further comprises a first speed of the first target at the given time in the first relative reference system;

wherein the second acquired track further comprises a second speed of the second target at the given time in the second relative reference system;

and wherein generating a three-dimensional track comprises computing a three-dimensional speed of said same single target (T, P) at the given time in the given three-dimensional reference system on the basis of the first position, the second position, the first speed, the second speed, and the same height ($h_o$) determined for the first target and the second target in the given three-dimensional reference system, said three-dimensional track comprising also the computed three-dimensional speed.

8. The method of claim 7, wherein the three-dimensional speed is computed also on the basis of:

• a first quantity, which is related to the same height ($h_o$) determined for the first target and the second target in the given three-dimensional reference system and indicates a first height of the first target at the given time in the first relative reference system; and

• a second quantity, which is related to the same height ($h_o$) determined for the first target and the second target in the given three-dimensional system and indicates a second height of the second target at the given time in the second relative reference system.

9. A processor (3) configured to implement the three-dimensional target tracking method claimed in any preceding claim.

**10.** A three-dimensional target tracking system (1) comprising:

• a first target location system (2, 11, A) having a first coverage area (13) and configured to generate first target tracks expressed in slant or bearing or spherical coordinates;
• at least a second target location system (2, 12, B) having a second coverage area (14) partially overlapping the first coverage area (13) and configured to generate second target tracks expressed in slant or bearing or spherical or geographic or Cartesian coordinates; and
• the processor (3) claimed in claim 9, said processor (3) being coupled to the first target location system (2, 11, A) for acquiring the first target tracks generated by said first target location system (2, 11, A), and to the second target location system (2, 12, B) for acquiring the second target tracks generated by said second target location system (2, 12, B).

**11.** A software program product comprising software code portions loadable in a memory of a processor (3), executable by said processor (3), and such that to cause, when executed, said processor (3) to become configured to implement the three-dimensional target tracking method claimed in any claim 1-8.

**Patentansprüche**

**1.** Ein drei-dimensionales Zielverfolgungsverfahren, welches Folgendes aufweist:

• erfassen einer ersten Spur (track) ausgedrückt in geneigten (slant) oder azimuth (bearing) oder-sphärischen Koordinaten und erzeugt durch ein erstes Zielortungssystem (2, 11, A) mit einer ersten Abdeckfläche (13), wobei die erste Spur eine erste Position eines Ziels zu einer gegebenen Zeit in einem ersten relativen Bezugsystem des ersten Zielortungssystem (2, 11, A) aufweist;
• erfassen einer zweiten Spur ausgedrückt in geneigten oder azimuth oder sphärischen oder geographischen oder kartesischen Koordinaten und erzeugt durch ein zweites Zielortungssystem (2, 12, B) mit einer zweiten Abdeckfläche (14), teilweise die erste Abdeckfläche (13) in einer Abdeckregion (15) geteilt von den zwei Zielortungssystemen (2, 11, 12, A, B) überdecken, wobei die zweite Spur eine erste Position eines zweiten Ziels zu einer gegebenen Zeit in einem zweiten relativen Referenzsystem des zweiten Zielortungssystem (2, 12, B) aufweist; und
• ausführen eines Korrelationstests auf der Basis der erfassten Spuren; wobei dann, wenn die zweite erfasste Spur, ausgedrückt wird in geneigten azimuth oder sphärischen Koordination, der Korrelationstest Folgendes aufweist:
• bestimmen einer ersten Richtung identifiziert auf einer Bezugsebene (PO) eines gegebenen dreidimensionalen Bezugssystems durch die erste Position und durch eine Position eines ersten Zielortungssystems;
• bestimmen einer zweiten Richtung identifiziert auf der Bezugsebene (PO) des gegebenen drei-dimensionalen Bezugssystems durch die zweite Position und durch eine Position des zweiten Zielortungssystems;
• prüfen, ob die erste Richtung und die zweite Richtung sich schneiden oder zusammenfallen;
• wenn die erste Richtung und die zweite Richtung einander schneiden oder miteinander zusammenfallen; prüfen, ob die erste Position, die zweite Position und ein gegebener Abstand (D) zwischen den zwei Zielortungssystemen (2, 11, 12, A, B) einer Dreieck-Ungleichheitsbezogenen Bedingung genügen;
• wenn die erste Position, die zweite Position, und der gegebene Abstand (D), die Dreieck-Ungleichheitsbezogenen Bedingung erfüllen, bestimmen, ob die gleiche Höhe ($h_o$) bestimmt ist für das erste Ziel und das zweite Ziel in dem gegebenen drei-dimensionalen Bezugssystem auf der Basis der ersten Position und der zweiten Position, und
• wenn eine gleiche Höhe ($h_o$) bestimmt wird für das erste Ziel und das zweite Ziel in dem gegebenen drei-dimensionalen Bezugssystem, detektieren, dass das erste Ziel und das zweite Ziel dasselbe einzige Ziel (T, P) repräsentieren, welches in der geteilten Abdeckregion (15) vorhanden ist; wobei dann, wenn die zweite erfasste Spur ausgedrückt wird in geografischen oder kartesischen Koordinaten, der Korrelationstest Folgendes aufweist:
• bestimmen einer ersten Richtung identifiziert auf der Bezugsebene (PO) des gegebenen drei-dimensionalen Bezugssystems durch die erste Position und durch eine Position des ersten Zielortungssystems;
• bestimmen einer dritten Position des zweiten Ziels auf der Bezugsebene (PO) des gegebenen drei-dimensionalen Bezugssystems auf der Basis der zweiten Position und einer Ursprungs-Position des zweiten relativen Bezugssystems in dem gegebenen drei-dimensionalen Bezugssystem;
• überprüfen, ob die erste Richtung durch die dritte Position verläuft;
• wenn die erste Richtung durch die dritte Position läuft überprüfen, ob die gleiche Höhe ($h_o$) bestimmt wird für

das erste Ziel und das zweite Ziel in dem gegebenen drei-dimensionalen Bezugssystem auf der Basis der ersten Position und der zweiten Position; und

• detektieren, dann wenn eine gleiche Höhe ($h_O$) bestimmt wird für das erste Ziel und das zweite Ziel in dem gegebenen drei-dimensionalen Referenzsystem, dass das erste Ziel und das zweit Ziel eins gleiches einziges Ziel (T, P) repräsentieren, welches in der geteilten Abdeckregion (15) vorhanden ist;

und wobei dann wenn das erste Ziel und das zweite Ziel dasselbe und einzige Ziel (T, P) repräsentieren, das in der geteilten Abdeckregion (15) vorhanden ist, das Verfahren ferner Folgendes aufweist:

erzeugen einer drei-dimensionalen Spur, die eine drei-dimensionale Position desselben einzigen Ziels (T, P) zu einer gegebenen Zeit in dem gegebenen drei-dimensionalen Referenzsystem aufweist, wobei die drei-dimensionale Position die gleiche Höhe ($h_O$) aufweist, die bestimmt ist für das erste Ziel und das zweite Ziel in dem gegebenen drei-dimensionalen Bezugssystem.

2. Verfahren nach Anspruch 1, wobei der Korrelationstest ausgeführt wird, wenn ein gegebener Abstand (D) zwischen den zwei Zielortungssystemen (2, 11, 12, A, B) einer gegebenen Beziehung genügt mit einem gegebenen maximalen linearen Messfehler der zwei Zielortungsmesssysteme (2, 11, 12, A, B).

3. Verfahren nach Anspruch 2, wobei der Korrelationstest ausgeführt wird wenn der gegebene Abstand (D) größer ist als oder gleich dem maximalen linearen Messfehler.

4. Verfahren nach Anspruch 3, wobei der gegebene maximale lineare Messfehler gleich ist dem größeren eines ersten maximalen linearen Messfehlers des ersten Zielortungsmesssystem (2, 11, A) und einem zweiten maximalen linearen Messfehler des zweiten Zielortungsmesssystem (2, 12, B).

5. Verfahren nach einem vorhergehenden Anspruch, wobei, wenn die zweite erfasste Spur ausgedrückt ist in geneigten oder azimuth oder späherischen Koordinaten, die erste Position, die zweite Position und der gegebene Abstand (D) der Dreiecks-Ungleichheitsbezogenen Bedingung erfüllen, wenn eine Summe eines ersten Abstandes ($\rho_A$) des ersten Ziels von dem ersten Zielortungssystem (2, 11, A) in dem ersten relativen Bezugssystem und ein zweiter Abstand ($\rho_B$) des zweiten Ziels von dem zweiten Zielortungssystem (2, 12, B) in dem zweiten relativen Bezugssystem größer ist als oder gleich dem erwähnten gegebenen Abstand (D) verringert und vergrößert durch einen gegebenen Messfehler der zwei Ziel-Ortungssysteme (2, 11, 12, A, B).

6. Verfahren nach Anspruch 5, wobei der gegebene Messefehler der zwei Zielortungssysteme (2, 11, 12, A, B) gleich ist einer Summe eines ersten Bereichsmessfehlers des ersten Zielortungssystems (2, 11, A) und eines zweiten Bereichsmessfehlers des zweiten Zielortungssystems (2, 12, B).

7. Verfahren nach einem vorherigen Anspruch, wobei die erste erfasste Spur ferner eine erste Geschwindigkeit des ersten Ziels zu einer gegebenen Zeit in dem ersten relativen Bezugssystem aufweist;
wobei die zweite erfasste Spur ferner eine zweite Geschwindigkeit des zweiten Ziels zu einer gegebenen Zeit in dem zwei Bezugssystem aufweist;
und wobei das Erzeugen einer drei-dimensionalen Spur, das Berechnen einer drei-dimensionalen Geschwindigkeit des gleichen einzelnen Ziels (T, P) aufweist und zwar zu der gegebenen Zeit in dem gegebenen drei-dimensionalen Bezugssystem auf der Basis der ersten Position, der zweiten Position, der ersten Geschwindigkeit, der zweiten Geschwindigkeit und der gleichen Höhe ($h_O$) bestimmt für das erste Ziel und das zweit Ziel in dem gegebenen drei-dimensionalen Bezugssystem, wobei die drei-dimensionale Spur auch die berechnete drei-dimensionale Geschwindigkeit aufweist.

8. Verfahren nach Anspruch 7, wobei die drei-dimensionale Geschwindigkeit auch berechnet wird auf der Basis von:

• einer ersten Größe, die in Beziehung steht mit der gleichen Höhe ($h_O$) bestimmt für das erste Ziel und das zweite Ziel in dem gegebenen drei-dimensionalen Bezugssystem und eine erste Höhe des ersten Ziels zu einer gegebenen Zeit in dem ersten relativen Bezugssystem anzeigt; und

• eine zweite Größe, die in Beziehung steht mit der gleichen Höhe ($h_O$) bestimmt für das erste Ziel und das zweite Ziel in dem gegebenen drei-dimensionalen System und die anzeigt eine zweite Höhe des zweiten Ziels zu der gegebenen Zeit in dem zweiten relativen Bezugssystem.

9. Ein Prozessor (3) konfiguriert zum implementieren des drei-dimensionalen Zielverfolgungsverfahrens nach einem vorherigen Anspruch.

10. Ein drei-dimensionales Zielverfolgungssystem (1), welches Folgendes aufweist:

• ein erstes Zielortungssystem (2, 11, A) mit einer ersten Abdeckfläche (13) zur Erzeugung von ersten Zielspuren ausgedrückt in geneigten oder azimuth oder späherischen Koordinaten;
• mindestens ein zweites Zielortungssystem (2, 12, B) mit einer zweiten Abdeckfläche (14) partiell die erste Abdeckfläche (13) überdeckend und konfiguriert um zweite Zielspuren zu erzeugen, und zwar ausgedrückt in Neigungs oder azimuth oder sphärischen oder geographischen oder kartesischen Koordinaten; und
• den Prozessor (3) nach Anspruch 9, wobei der Prozessor (3) mit dem ersten Zielortungssystem (2, 11, A) gekoppelt ist, um die ersten Zielspuren erzeugt durch das erste Zielortungssystem (2, 11, A) zu erfassen und ferner gekoppelt mit dem zweiten Zielortungssystem (2, 12, B) zum erfassen der zweiten Zielspuren erzeugt durch das zweite Zielortungssystem (2, 12, B).

11. Ein Softwareprogrammprodukt welches Softwarecodeteile aufweist, die in einen Speicher eines Prozessors (3) ladbar sind, ausführbar durch den Prozessor (3) und derart vorgesehen, dass bei Ausführung bewirkt wird, dass der Prozessor (3) konfiguriert wird, um das drei-dimensionale Zielverfolgungsverfahren nach einem der Ansprüche 1 bis 8 zu implementieren.

**Revendications**

1. Méthode de suivi de cible tridimensionnelle comprenant :

• l'acquisition d'une première trace exprimée en coordonnées rabattues ou azimutales ou sphériques et générée par un premier système de localisation de cible (2, 11, A) ayant une première zone de couverture (13), ladite première trace comprenant une première position d'une première cible à un temps donné dans un premier système de référence relatif du premier système de localisation de cible (2, 11, A) ;
• l'acquisition d'une seconde trace exprimée en coordonnées rabattues ou azimutales ou sphériques ou géographiques ou cartésiennes et générée par un second système de localisation de cible (2, 12, B) ayant une seconde zone de couverture (14) chevauchant partiellement la première zone de couverture (13) dans une région de couverture (15) partagée par les deux systèmes de localisation de cible (2, 11, 12, A, B), ladite seconde trace comprenant une deuxième position d'une seconde cible au temps donné dans un second système de référence relatif du second système de localisation de cible (2, 12, B) ; et
• la réalisation d'un test de corrélation sur la base des traces acquises ;

dans laquelle, si la seconde trace acquise est exprimée en coordonnées rabattues ou azimutales ou sphériques, le test de corrélation inclus :

• la détermination d'une première direction identifiée sur un plan de référence (PO) d'un système de référence tridimensionnel donné, par la première position et par une position du premier système de localisation de cible ;
• la détermination d'une seconde direction identifiée, sur le plan de référence (PO) du système de référence tridimensionnel donné, par la deuxième position et par une position du second système de localisation de cible ;
• la vérification consistant à savoir si la première direction et la seconde direction se coupent l'une l'autre ou coïncident ;
• si la première direction et la seconde direction se coupent l'une l'autre ou coïncident, la vérification consistant à savoir si la première position, la deuxième position et une distance donnée (D) entre les deux systèmes de localisation de cible (2, 11, 12, A, B) satisfont une condition liée à l'inégalité triangulaire ;
• si la première position, la deuxième position et la distance donnée (D) satisfont la condition liée à l'inégalité triangulaire, la vérification consistant à savoir si une même hauteur ($h_o$) est déterminée pour la première cible et la seconde cible dans le système de référence tridimensionnel donné sur la base de la première position et de la deuxième position ; et
• si une même hauteur ($h_o$) est déterminée pour la première cible et la seconde cible dans le système de référence tridimensionnel donné, la détection que la première cible et la seconde cible représentent une seule et même cible (T, P) présente dans la région de couverture partagée (15) ;

dans laquelle, si la seconde trace acquise est exprimée en coordonnées géographiques ou cartésiennes, le test de corrélation inclut :

- la détermination d'une première direction identifiée sur le plan de référence (PO) du système de référence tridimensionnel donné par la première position et par une position du premier système de localisation de cible ;
- la détermination d'une troisième position de la seconde cible sur le plan de référence (PO) du système de référence tridimensionnel donné sur la base de la deuxième position et d'une position d'origine du second système de référence relatif dans le système de référence tridimensionnel donné ;
- la vérification consistant à savoir si la première direction passe par la troisième position ;
- si la première position passe par la troisième position, la vérification consistant à savoir si une même hauteur ($h_o$) est déterminée pour la première cible et la seconde cible dans le système de référence tridimensionnel donné sur la base de la première position et de la deuxième position ; et
- si une même hauteur ($h_o$) est déterminée pour la première cible et la seconde cible dans le système de référence tridimensionnel donné, la détection que la première cible et la seconde cible représentent une seule et même cible (T, P) présente dans la région de couverture partagée (15) ;

et dans laquelle, si la première cible et la seconde cible représentent une seule et même cible (T, P) présente dans la région de couverture partagée (15), la méthode comprend en outre la génération d'une trace tridimensionnelle qui comprend une position tridimensionnelle de ladite seule et même cible (T, P) au temps donné dans le système de référence tridimensionnel donné, ladite position tridimensionnelle comprenant la même hauteur ($h_o$) déterminée pour la première cible et la seconde cible dans le système de référence tridimensionnel donné.

2. Méthode selon la revendication 1, dans laquelle le test de corrélation est réalisé si une distance donnée (D) entre les deux systèmes de localisation de cible (2, 11, 12, A, B) satisfait une relation donnée avec une erreur de mesure linéaire maximale donnée des deux systèmes de localisation de cible (2, 11, 12, A, B).

3. Méthode selon la revendication 2, dans laquelle le test de corrélation est réalisé si la distance donnée (D) est supérieure ou égale à ladite erreur de mesure linéaire maximale.

4. Méthode selon la revendication 3, dans laquelle l'erreur de mesure linéaire maximale donnée est égale à la plus grande d'une première erreur de mesure linéaire maximale du premier système de localisation de cible (2, 11, A) et d'une seconde erreur de mesure linéaire maximale du second système de localisation de cible (2, 12, B).

5. Méthode selon l'une quelconque des revendications précédentes, dans laquelle, si la seconde trace acquise est exprimée en coordonnées rabattues ou azimutales ou sphériques, la première position, la deuxième position et la distance donnée (D) satisfont la condition liée à l'inégalité triangulaire si une somme d'une première distance ($\rho_A$) de la première cible au premier système de localisation de cible (2, 11, A) dans le premier système de référence relatif et d'une seconde distance ($\rho_B$) de la seconde cible au second système de localisation de cible (2, 12, B) dans le second système de référence relatif est supérieure ou égale à ladite distance donnée (D) diminuée et augmentée par une erreur de mesure donnée des deux systèmes de localisation de cible (2, 11, 12, A, B).

6. Méthode selon la revendication 5, dans laquelle l'erreur de mesure donnée des deux systèmes de localisation de cible (2, 11, 12, A, B) est égale à une somme d'une première erreur de mesure de portée du premier système de localisation de cible (2, 11, A) et d'une seconde erreur de mesure de portée du second système de localisation de cible (2, 12, B).

7. Méthode selon l'une quelconque des revendications précédentes, dans laquelle la première trace acquise comprend en outre une première vitesse de la première cible au temps donné dans le premier système de référence relatif ; dans laquelle la seconde trace acquise comprend en outre une seconde vitesse de la seconde cible au temps donné dans le second système de référence relatif ; et dans laquelle la génération d'une trace tridimensionnelle comprend le calcul d'une vitesse tridimensionnelle de ladite seule et même cible (T, P) au temps donné dans le système de référence tridimensionnel donné sur la base de la première position, de la deuxième position, de la première vitesse, de la seconde vitesse, et de la même hauteur ($h_o$) déterminée pour la première cible et la seconde cible dans le système de référence tridimensionnel donné, ladite trace tridimensionnelle comprenant également la vitesse tridimensionnelle calculée.

8. Méthode selon la revendication 7, dans laquelle la vitesse tridimensionnelle est calculée également sur la base de :

- une première quantité, qui est liée à la même hauteur ($h_o$) déterminée pour la première cible et la seconde cible dans le système de référence tridimensionnel donné et indique une première hauteur de la première cible au temps donné dans le premier système de référence relatif ; et

• une seconde quantité, qui est liée à la même hauteur ($h_o$) déterminée pour la première cible et la seconde cible dans le système tridimensionnel donné et indique une seconde hauteur de la seconde cible au temps donné dans le second système de référence relatif.

9. Processeur (3) configuré pour implémenter la méthode de suivi de cible tridimensionnelle revendiquée dans l'une quelconque des revendications précédentes.

10. Système de suivi de cible tridimensionnelle (1) comprenant :

   • un premier système de localisation de cible (2, 11, A) ayant une première zone de couverture (13) et configuré pour générer des premières traces de cible exprimées en coordonnées rabattues ou azimutales ou sphériques ;
   • au moins un système de localisation de cible (2, 12, B) ayant une seconde zone de couverture (14) chevauchant partiellement la première zone de couverture (13) et configuré pour générer des secondes traces de cible exprimées en coordonnées rabattues ou azimutales ou sphériques ou géographiques ou cartésiennes ; et
   • le processeur (3) revendiqué dans la revendication 9, ledit processeur (3) étant couplé au premier système de localisation de cible (2, 11, A) permettant d'acquérir les premières traces de cible générées par ledit premier système de localisation de cible (2, 11, A), et au second système de localisation de cible (2, 12, B) permettant d'acquérir les secondes traces de cible générées par ledit second système de localisation de cible (2, 12, B).

11. Produit de programme logiciel comprenant des portions de code logiciel chargeable dans une mémoire de processeur (3), exécutable par ledit processeur (3), et tel à amener, une fois exécuté, ledit processeur (3) à être configuré pour implémenter la méthode de suivi de cible tridimensionnelle revendiquée dans l'une quelconque des revendications 1 à 8.

1

2 ─── Target loca-
tion system 1

2D- or 3D-tracks

2 ─── Target loca-
tion system 2

2D- or 3D-tracks

Electronic
processor

3

3D-tracks

2 ─── Target loca-
tion system N

2D- or 3D-tracks

## FIG. 1

$\delta\rho$

$\delta\rho$

$\delta\rho$

$2\sigma_\theta$

$\delta\rho$

5

7

6

8

6

6

9

6

10

## FIG. 2

FIG. 3

FIG. 4

FIG. 5

FIG. 6

**EP 2 418 509 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4123898 A1
- US 4621267 A